# EUROPEAN PATENT SPECIFICATION

(11) **EP 3 381 877 B1**
(45) Date of publication and mention of the grant of the patent: **27.12.2023**
(21) Application number: 18165237.1
(22) Date of filing: 29.03.2018
(51) Int. Cl.: C03C 17/34, C03C 17/38, C03C 17/42

(54) **SAFETY COLOURED GLASS SHEET AND PROCESS OF PRODUCTION**
GEFÄRBTE SICHERHEITSGLASSCHEIBE UND DEREN HERSTELLUNGSVERFAHERN
PLAQUE DE VERRE DE SECURITE COLOREE ET PROCEDE DE PRODUCTION

(30) Priority: 29.03.2017 IT 201700034726
(43) Date of publication of application: 03.10.2018
(73) Proprietor: Omni Decor S.R.L., 64023 Mosciano Sant'Angelo (TE) (IT)
(72) Inventor: Bresciani, Ferruccio, 22066 Mariano Comense (CO) (IT)
(74) Representative: Studio Torta S.p.A.

(56) References cited:
- US-A- 5 019 440
- US-A1- 2001 019 772
- US-A1- 2015 225 285

## Description

### PRIORITY CLAIM

*This application claims priority from* Italian Patent Application no. 102017000034726 filed on 29/03/2017*.*

The present invention relates to a safety coloured glass sheet and to its manufacturing method.

Sheet glass or flat glass is a widely used material in various fields, for example in building/architecture and interior design. US-5019440 discloses a decorative glass or plastic plate comprising a primer layer of a light-permeable polyurethane resin, a transfer-printed layer of a printed image formed of an ink containing a pigment and a binder, and a cured resin layer, these layers being formed consecutively on one surface of a light-permeable glass plate. US-200119772 describes a method for printing ink on a substrate comprising the steps of coating a glass substrate with an adhesion promoter, depositing one or more layers of ink on the coated substrate, and laminating the imaged substrate. The substrate can be a glass substrate, and the adhesion promoter can include a silane material, powder coating, organophosphate primer suspended in isopropanol. US-2015225285 describes a process for adhering a layer of organic paint to the surface of a glass sheet, and the products produced thereby. The process comprises applying a layer of a water-based silicate paint to the surface of the glass sheet, heating to cure the paint, forming the glass sheet into a shape, sensitizing the water based paint with a layer of silane material, applying a layer of organic paint over the layer of sensitized water-based silicate paint, and curing the organic paint to provide organic paint adhered to the glass surface.

For these applications, coloured glass is often required. The use of mass coloured glass, i.e. in which the colour is generated by the presence of metal oxides in the chemical composition of the glass, is normally limited to particular uses, such as the typical lead-bound glass panels of religious sites or the glass for antique and traditional doors.

For more common applications, such as wall cladding, it is known to impart a particular colour to a glass sheet by applying a layer of coloured paint on a face of the sheet, in particular the face used to glue the sheet on the wall to be cladded.

The application of the paint aims to make the sheet coloured, or in any case no longer transparent or translucent, to use it as a coloured coating while maintaining the high surface gloss typical of a glass surface and at the same time ensuring that the colour is not scratched or nicked (the colour being on the face to be glued to the wall).

The glass sheets of the type mentioned herein have excellent aesthetic characteristics, given by the combination of the transparency of the glass and the applied colour, and maintain such characteristics over time.

The glass used to make this type of coloured glass is normally extra-clear glass, namely of a particularly white colour due to the very low or almost zero amount of iron oxides in the glass composition mixture.

Conventionally, in the field of flat glass, "face 1" is the one on the side of the observer, whereas the opposite face is called "face 2".

The particularly white colour of the glass, with no colour dominants, allows having on "face 1" a result which is very similar to the colour of the used paint, therefore lacking the green shade always interfering in normal glasses having a sodium-calcium composition.

The glass thus obtained can have various applications in current interior decoration as cladding of cabinets or kitchens, interior doors, tables, or as a wall cladding in commercial environments.

Usually produced sheets have standard dimensions, e.g. a width of 3210 mm and a length ranging from 2250 mm to 2600 mm, and a thickness generally ranging from 4 mm to 12 mm. The usual size of the sheets affects the use of this type of glass, thus limiting it to glassworkers that are able to move and cut the sheets to size and perimetrically grind the obtained pieces. The final measure will be the one requested by the end users of the glass, namely, e.g. the producers of kitchens or furniture on whose doors the glass will be applied, or the decorators requiring a wall cladding for commercial environments (hotels, shops, etc.). The coloured paint can be applied by means of different industrial painting systems: in general, all processes suitable for painting large-sized sheets can be used, e.g. using glazing machines, roller machines, spraying machines, screen-printing machines, etc.

The used paints are e.g. water-based paints, which are first flashed off and then oven-dried.

However, the glass thus produced cannot be subjected to temperatures exceeding 200°C, because the organic paint layer would be irreparably compromised by the modification of fundamental parameters such as colour, adhesion or surface appearance.

Moreover, many applications require the use of a glass having a high mechanical strength but also able, in case of breakage, to avoid a fragmentation in small pieces, which could be potentially dangerous for people nearby.

The tempering process is a known way to increase the mechanical strength of the glass: in fact, the tempering usually increases about four times glass resistance, if compared to a normal or annealed glass.

Usually, the tempering process is carried out on the piece, which has been cut into the final size and ground.

However, since the tempering process normally reaches temperatures of about 680-700°C, the coloured glass described above cannot be subjected to the tempering process because it would destroy the organic paint layer. Moreover, even tempered glass is not free from fragmentation.

The application on the glass of an adhesive film made of polymeric material, generally PVC or PP, having a thickness of about 30-40 microns is a further known method to give greater fragmentation resistance to a painted coloured glass.

The application of this adhesive film on large glass sheets, however, is slow and difficult and requires self-adhesive polymeric films in rolls of appropriate length and width, which are not always available or are quite hard to find.

Furthermore, since these films are normally available in rolls having a height smaller than the one necessary for the complete covering of the sheet, it must resort to film overlays, which however generate differences in the thickness of the glass sheet. These thickness differences give rise to various drawbacks, even aesthetic ones, so that they are not easily accepted by the users. A non-perfect application of the films can also involve the formation of bubbles, inclusions and defects in general, which in turn cause aesthetic and functional imperfections. Therefore, there is still the need to guarantee a certain degree of safety to coloured painted glass even in case of breakage due to accidental impacts.

It is an object of the present invention to provide a coloured flat glass, and the relative manufacturing method, which are free from the aforesaid drawbacks of the prior art. In particular, it is an object of the invention to provide a flat glass, even in large sheets, which is coloured and at the same time has high mechanical strength and fragmentation resistance.

Basically, it is an object of the invention to improve the safety of painted coloured glass without subjecting it to the tempering process, to avoid any damage to persons in the event of breakage and consequent production of splinters, by using a simple industrial process similar to the one used for staining glass.

According to these purposes, the present invention relates to a glass sheet and to its manufacturing method as essentially defined in the annexed claims 1 and 8, respectively, as well as, with regard to the preferred additional features, in the dependent claims.

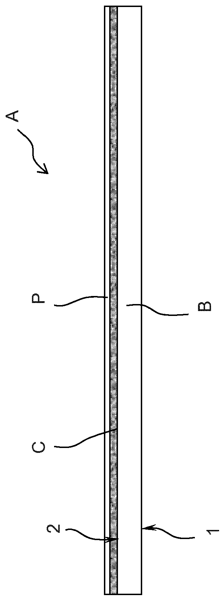

Features and advantages of the present invention will be clear from the following description of a non-limiting embodiment, with reference to the accompanying figure, which is an out-of-scale side schematic view of a glass sheet made according to the invention.

In the accompanying figure, a flat sheet of safety coloured glass is indicated with A.

For example, the sheet A has a size ranging from 3210 x 2250 mm to 3210 x 2600 mm, and a thickness ranging between 4 and 12 mm.

It is clear that the sheet A may have a size different from the one indicated herein by way of example.

The sheet A has a substantially flat sheet body B with a first face 1 and a second face 2, plane and parallel and opposite one another; the face 1 is intended to be turned, in use, towards the users/observers; the face 2 is intended to be arranged on an outer support surface, e.g. a wall (if the sheet A is used as a wall cladding) or a surface of a piece of furniture or any other furniture item.

The sheet body B is a non-stratified monolithic body, and the sheet A therefore consists of a single layer of glass formed by the sheet body B.

Preferably, the sheet body B is made of an extra-clear glass with a low or reduced iron oxide content, so as to have a light transmission of at least 90% and preferably at least 91%. It is however clear that the sheet body B may also be made of another type of glass, e.g. a clear glass. The face 2 is provided with a coloured paint layer C, applied on the face 2 to be coupled to the support surface and directly in contact with the glass on face 2.

The layer C is made of coloured paint, e.g. an organic water-based paint or a powder paint or an inorganic paint, e.g. a ceramic enamel.

The coloured paint is evenly applied on the face 2 in liquid form, e.g. by means of a glazing machine, a roller machine, a spraying machine, or any other. Alternatively, the coloured paint is a powder paint, which is applied in solid form, e.g. by means of a spraying machine.

Once the paint has been applied, the layer C is subjected to a flash-off step of about 5-15 minutes, e.g. about 10 minutes; and to an oven-drying step, e.g. in an infrared radiation oven. The paint is dried for about 5 to 10 minutes, e.g. about 8 minutes, at a temperature of 80-120°C, e.g. about 90°C.

The face 2 is further provided, upon the layer C and in direct contact with the layer C, with a protective layer P, made of a safety resin.

The safety resin is evenly applied on the face 2, upon the layer C, in liquid form by means of a spraying process or a glazing or roller deposition, a screen-printing process, or a different process.

The safety resin is applied after having applied the coloured paint layer C to stain the glass and upon the layer C.

The sheet A is then made by applying two layers P, C made of different materials, both applied on the face 2 of the sheet body B and one upon the other. The coloured layer C, directly applied on the face 2, is formed by coloured paint and has a decorative function, whereas the protective layer P, applied upon the coloured layer C, is formed by the safety resin and has a safety function. The protective layer P keeps together the pieces of glass in case of accidental breakage of the sheet A, thus avoiding a dangerous detachment and falling of sharp glass fragments. The protective layer P is made of a polymeric resin, in particular a preferably elastomer polyurethane resin.

Once applied on the face 2, the resin is flashed off (if necessary) and dried analogously to what done for applying the paint layer C.

For example, the layer P is subjected to a flash-off step, e.g. in a hot air oven or in an IR radiation oven, indicatively for about 5 minutes, e.g. for about 2 minutes. Then, to achieve the so-called "out of print" condition, the resin is dried in free air at a temperature of e.g. about 25°C for about 120-180 minutes.

The flash-off (if necessary) and drying can also take place in other modes and operating conditions (times and temperatures), e.g. in a hot air tunnel or even simply at room temperature.

The resin is preferably applied in two coats, thus reaching a final thickness of the (wet film) layer P ranging from about 300 to about 500 microns.

Advantageously, but not necessarily, the resin applied in the layer P is transparent, so as not to alter the colour given by the paint layer C when the sheet A is observed from the side of the face 2. Alternatively, the resin may not be transparent, being for example opaque, semitransparent, coloured, etc.

The appearance of the thus treated face 2 of the sheet A is even, without variations in thickness, and aesthetically pleasing since it is glossy and has the desired colour.

The glass sheet A according to the invention has also proved to possess high safety features, passing the tests required by the UNI EN 12600/2004 standard (pendulum test). This standard defines the criteria for measuring the resistance and breaking behaviour of a sheet when it is hit by a soft body simulating the impact with a person. The standard classifies the glass sheets in order to evaluate the risk of cutting wounds and to determine their ability to contain the fragments resulting from the impact, or the sheet crossing resistance.

The glass object of the invention is classified in class 2(B)2, which is the one of laminated safety glass.

Moreover, the presence of the protective layer P does not affect the possibility of cutting the glass in the desired size by means of traditional techniques. In fact, the sheet A can be cut without problems, since after a traditional engraving performed on the face 1, the layer P splits during a subsequent break-up operation without requiring any special precaution.

It is finally understood that the glass sheet and its manufacturing method described and illustrated herein may undergo further modifications and variations, which do not depart from the scope of the appended claims.

## Claims

1. A method for manufacturing a safety coloured glass sheet (A), comprising the steps of: making an essentially flat glass sheet body (B) having a pair of opposite plane and parallel faces (1, 2); applying on a first face (2) a coloured paint layer (C) made of a coloured paint and directly in contact with the glass on said first face (2); and applying on said coloured paint layer (C) a protective layer (P) made of a safety resin, which adheres to said coloured paint layer (C), wherein the safety resin is evenly applied on said coloured paint layer (C) in liquid form reaching a thickness of wet film ranging from about 300 to about 500 microns, and the protective layer (P) is subjected to a flash-off step and to a drying step, such as to keep the sheet body (B) together in case of impact, thus avoiding the formation of glass fragments.

2. A method according to claim 1, wherein the sheet body (8) is produced with a width of about 3210 mm and a length ranging between about 2250 mm and about 2600 mm, and a thickness ranging between about 4 and about 12 mm.

3. A method according to claim 1 or 2, wherein the protective layer (P) is made of an elastomer resin.

4. A method according to any one of the preceding claims , wherein the protective layer (P) is made of a polyurethane resin.

5. A method according to any one of the preceding claims , wherein the safety resin is substantially transparent, whereby the protective layer (P) is also substantially transparent.

6. A method according to any one of the preceding claims, wherein the sheet body (B) is made of an extra-clear glass with low or reduced content of iron oxides and having a light transmission of at least 90% and preferably at least 91%.

7. A method according to any one of the preceding claims, wherein the coloured paint layer (C) is made of an organic water paint or powder paint.

8. A method according to any one of the preceding claims, wherein the coloured paint layer (C) is subjected to a flash-off step; and to a drying step.

9. A method according to any one of the preceding claims, wherein the coloured paint is evenly applied on said first face (2) in liquid or solid form.

## Patentansprüche

1. Verfahren zum Herstellen einer farbigen Sicherheitsglasscheibe (A), das die folgenden Schritte umfasst: Herstellen eines im wesentlichen flachen Glasscheibenkörpers (B), der ein Paar gegenüberliegender ebener und paralleler Flächen (1, 2) aufweist; Aufbringen einer farbigen Lackschicht (C), die aus einem farbigen Lack hergestellt ist und direkt mit dem Glas auf der ersten Fläche (2) in Kontakt steht; und Aufbringen einer Schutzschicht (P), die aus einem Sicherheitsharz hergestellt ist, das an der farbigen Lackschicht (C) haftet, auf die farbige Lackschicht (C), wobei das Sicherheitsharz in flüssiger Form gleichmäßig auf die farbige Lackschicht (C) aufgebracht wird und eine Nassfilmdicke im Bereich von etwa 300 bis etwa 500 Mikron erreicht, und die Schutzschicht (P) einem Ablüftungsschritt und einem Trocknungsschritt unterzogen wird, so dass der Scheibenkörper (B) im Falle eines Aufpralls zusammengehalten wird und somit die Bildung von Glassplittern vermieden wird.

2. Verfahren nach Anspruch 1, wobei der Scheibenkörper (8) mit einer Breite von etwa 3210 mm und einer Länge im Bereich zwischen etwa 2250 mm und etwa 2600 mm und einer Dicke im Bereich zwischen etwa 4 und etwa 12 mm hergestellt wird.

3. Verfahren nach Anspruch 1 oder 2, wobei die Schutzschicht (P) aus einem Elastomerharz hergestellt wird.

4. Verfahren nach einem der vorangehenden Ansprüche, wobei die Schutzschicht (P) aus einem Polyurethanharz hergestellt wird.

5. Verfahren nach einem der vorangehenden Ansprüche, wobei das Sicherheitsharz im Wesentlichen transparent ist, wodurch die Schutzschicht (P) ebenfalls im Wesentlichen transparent ist.

6. Verfahren nach einem der vorangehenden Ansprüche, wobei der Scheibenkörper (B) aus einem extraklaren Glas mit niedrigem oder reduziertem Gehalt an Eisenoxiden hergestellt ist und eine Lichtdurchlässigkeit von wenigstens 90% und vorzugsweise wenigstens 91% aufweist.

7. Verfahren nach einem der vorangehenden Ansprüche, wobei die farbige Lackschicht (C) aus einen organischen Wasserlack oder Pulverlack hergestellt wird.

8. Verfahren nach einem der vorangehenden Ansprüche, wobei die farbige Lackschicht (C) einem Ablüftungsschritt und einem Trocknungsschritt unterzogen wird.

9. Verfahren nach einem der vorangehenden Ansprüche, wobei der farbige Lack in flüssiger oder fester Form gleichmäßig auf die erste Fläche (2) aufgetragen wird.

## Revendications

1. Procédé pour fabriquer une feuille de verre de sécurité colorée (A), comprenant les étapes de : préparation d'un corps de feuille de verre pratiquement plat (B) ayant une paire de faces parallèles et sur des plans opposés (1, 2) ; application sur une première face (2) d'une couche de peinture colorée (C) faite d'une peinture colorée et directement en contact avec le verre sur ladite première face (2) ; et application sur ladite couche de peinture colorée (C) d'une couche protectrice (P) faite d'une résine de sécurité, qui adhère à ladite couche de peinture colorée (C), dans lequel la résine de sécurité est appliquée uniformément sur ladite couche de peinture colorée (C) sous forme liquide en atteignant une épaisseur de film humide située dans la plage allant d'environ 300 à environ 500 micromètres, et la couche protectrice (P) est soumise à une étape d'évaporation et à une étape de séchage, de façon que le corps de feuille (B) soit maintenu solidaire dans le cas d'un choc, ce qui évite ainsi la formation de fragments de verre.

2. Procédé selon la revendication 1, dans lequel le corps de feuille (8) est produit avec une largeur d'environ 3210 mm et une longueur située dans la plage comprise entre environ 2250 mm et environ 2600 mm, et une épaisseur située dans la plage comprise entre environ 4 et environ 12 mm.

3. Procédé selon la revendication 1 ou 2, dans lequel la couche protectrice (P) est faite d'une résine élastomère.

4. Procédé selon l'une quelconque des revendications précédentes, dans lequel la couche protectrice (P) est faite d'une résine de polyuréthane.

5. Procédé selon l'une quelconque des revendications précédentes, dans lequel la résine de sécurité est pratiquement transparente, moyennant quoi la couche protectrice (P) est aussi pratiquement transparente.

6. Procédé selon l'une quelconque des revendications précédentes, dans lequel le corps de feuille (B) est fait d'un verre extrêmement transparent ayant une teneur faible ou réduite en oxydes de fer et ayant une transmission de lumière d'au moins 90 % et de préférence d'au moins 91 %.

7. Procédé selon l'une quelconque des revendications précédentes, dans lequel la couche de peinture colorée (C) est faite d'une peinture en poudre ou d'une peinture à l'eau organique.

8. Procédé selon l'une quelconque des revendications précédentes, dans lequel la couche de peinture colorée (C) est soumise à une étape d'évaporation ; et à une étape de séchage.

9. Procédé selon l'une quelconque des revendications précédentes, dans lequel la peinture colorée est uniformément appliquée sur ladite première face (2) sous forme liquide ou solide.
